(19) Europäisches Patentamt
European Patent Office
Office européen des brevets

(11) Numéro de publication: **0 021 358**
**B1**

(12) **FASCICULE DE BREVET EUROPEEN**

(45) Date de publication du fascicule du brevet: **27.04.83**

(51) Int. Cl.³: **H 01 M 4/58,** C 01 B 35/12

(21) Numéro de dépôt: **80103441.4**

(22) Date de dépôt: **20.06.80**

(54) **Réacteur électrochimique.**

(30) Priorité: **27.06.79 FR 7916554**

(43) Date de publication de la demande:
**07.01.81 Bulletin 81/1**

(45) Mention de la délivrance du brevet:
**27.04.83 Bulletin 83/17**

(84) Etats contractants désignés:
**AT BE CH DE FR GB IT LI LU NL SE**

(56) Documents cités:
**FR - A - 2 014 606**
**US - A - 3 361 596**

**GMELIN HANDBUCH DER ANORGANISCHEN CHEMIE, vol. 28, no. 7, edition 8, Springer Verlag 1975 Berlin DE G. HELER: "Borverbindungen, Borixide, Borsauren, Borate Erganzungswerk", page 89**

(73) Titulaire: **GIPELEC S.A.**
**125, rue du Président Wilson**
**F-92302 Levallois-Perret (FR)**

(72) Inventeur: **Lecerf, André, Prof.**
**24 Avenue Le Brix**
**F-35740 Pace (FR)**
Inventeur: **Broussely, Michel**
**36, rue de la Bugellerie**
**F-86000 Poitiers (FR)**

(74) Mandataire: **Weinmiller, Jürgen**
**Zeppelinstrasse 63**
**D-8000 München 80 (DE)**

**EP 0 021 358 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Réacteur électrochimique

L'invention concerne un générateur électrochimique, dont l'électrode négative est du lithium et l'électrolyte est une solution liquide à la température ambiante dont le solvant est un composé aprotique.

On connaît des composés chimiques du type des sels oxygénés du bore signalés dans le traité de Pascal, t. VI, p. 196 de l'édition 1961 (Masson et Cie Editeurs), sous le nom de "tiers-borates" et de formule $B_2O_3$, $3M_2O$; $M_2O$ est un oxyde basique alcalon où l'on peut remplacer $M_2$ par un élément divalent X.

Toujours dans le traité de Pascal, mais tome III, édition 1957, p. 343, il est signalé qu'en 1952, Rose aurait obtenu par voie humide un orthoborate hydraté de formule $Cu_3$ $(BO_3)_2$, $3H_2O$.

L'invention a pour objet un générateur électrochimique du type cité ci-dessus, qui est caractérisé par le fait que la matière active positive est constituée par un borate anhydre de formule $Cu_3B_2O_6$.

Les solvants d'électrolyte peuvent avantageusement être soit des esters comme le carbonate de propylène ou d'éthylène, soit des éthers cycliques comme le tétrahydrofurane et le dioxolanne, soit des éthers à chaîne droite comme les glymes et en particulier le diméthoxyéthane, soit leurs melanges. Le soluté est de préférence le perchlorate de lithium, mais peut être aussi du tétrafluoborate de lithium, ou de l'hexafluorarséniate de lithium entre autres.

Le borate de cuivre est préparé en faisant réagir l'oxyde de bore $B_2O_3$ et l'oxyde de cuivre CuO selon la réaction:

$$B_2O_3+3CuO \rightarrow Cu_3B_2O_6.$$

Les oxydes sont mélangés dans la proportion d'une mole de $B_2O_3$ pour trois moles de CuO, et le mélange est chauffé à une température comprise entre 800°C et 1000°C environ.

A une température inférieure à 800°C il ne se forme pas $Cu_3B_2O_6$ et il reste de l'oxyde de cuivre non combiné. A une température supérieure à 1000°C il y a fusion avec décomposition partielle.

De préférence la température de chauffage est comprise entre 900°C et 950°C. En effet entre 800°C et 900°C, la réaction ne se produit que lentement, et au-dessus de 950°C le composé ne doit pas être chauffé trop longtemps, sans quoi il finit par subir un début de décomposition.

Au contraire entre 900°C et 950°C la réaction est rapide et le produit est stable.

Selon un mode de préparation préféré, on chauffe le mélange une heure à 900°C, on homogénéise la préparation par broyage, puis on chauffe de nouveau une heure à 900°C. L'étude aux rayons X des cristaux obtenus montre que la maille est triclinique et que les paramètres ont pour valeur:

| | |
|---|---|
| a=18,44 Å | $\alpha$=90° |
| b=3,378 Å | $\beta$=96,50° |
| c=18,41 Å | $\gamma$=90° |

La masse spécifique calculée à partir de ces paramètres:
$\rho$=4,493 g/cm³ est en bon accord avec la masse spécifique mesurée:
$\rho$=4,50 g/cm³.

L'invention sera mieux comprise à l'aide des exemples suivants décrits en relation avec les dessins annexés dans lesquels:

— la figure 1 représente schématiquement une pile selon l'invention qui a été réalisée pour les essais décrite dans les exemples.

— la figure 2 représente la courbe de décharge d'une pile selon l'invention à régime de décharge assez lent.

— la figure 3 représente les courbes de décharge de deux autres piles selon l'invention à régime de décharge moyen.

— la figure 4 représente les courbes de décharge de deux piles semblables à celles de la figure 3 à régime de décharge rapide.

Des piles selon l'invention ont été réalisées sous la forme de la pile bouton schématisée sur la figure 1.

Sur cette figure la référence 1 désigne une compelle positive en acier inoxydable qui contient la masse active positive 3 maintenue par un anneau métallique 2. Une coupelle négative 8 également en acier inoxydable contient la matière active négative 6 qui est du lithium, incrustée sur une grille de support 7 en nickel soudée à la coupelle 8.

Les matières actives sont séparées par un séparateur barrière 4 en polyéthylène et un séparateur poreux cellulosique 5 imbibé d'électrolyte. Un joint 9 en polypropylène isole les deux coupelles et assure l'étanchéité de la pile.

La matière active positive selon l'invention du borate de cuivre anhydre $Cu_3$ $B_2$ $O_6$, a été mélangée à 5% en poids de graphite pour former une masse active positive. Toutes les piles des exemples qui vont suivre ont été montées en employant 280 mg de cette masse active positive, ce qui correspond à une capacité théorique de 138 mAh. La surface d'échange des électrodes est environ 0.60 cm². La quantité de lithium correspond à une capacité théorique de 195 mAh, donc très excédentaire vis-à-vis de l'électrode positive.

1er exemple: Des piles telles qu'elles viennent d'être décrites ont été montées en employant comme électrolyte une solution molaire de perchlorate de lithium dans du carbonate de propylène. Elles ont été

déchargées sur une résistance de 62 k Ω. La courbe de décharge moyenne est représentée sur la figure 2 où le temps de décharge t, en heures, a été porté en abscisses et la tension V en volts en ordonnées. Comme on le voit, la tension est un peu supérieure à 2 volts pendant la première partie de la décharge. La décharge a été arrêtée à 1,3 volt et a donné 126 mAh, c'est-à-dire un rendement de 90%.

2ème exemple: Des piles analogues ont été montées en prenant comme électrolyte une solution molaire de perchlorate de lithium dans un mélange à volumes égaux de carbonate de propylène et de 1,2 diméthoxyéthane.

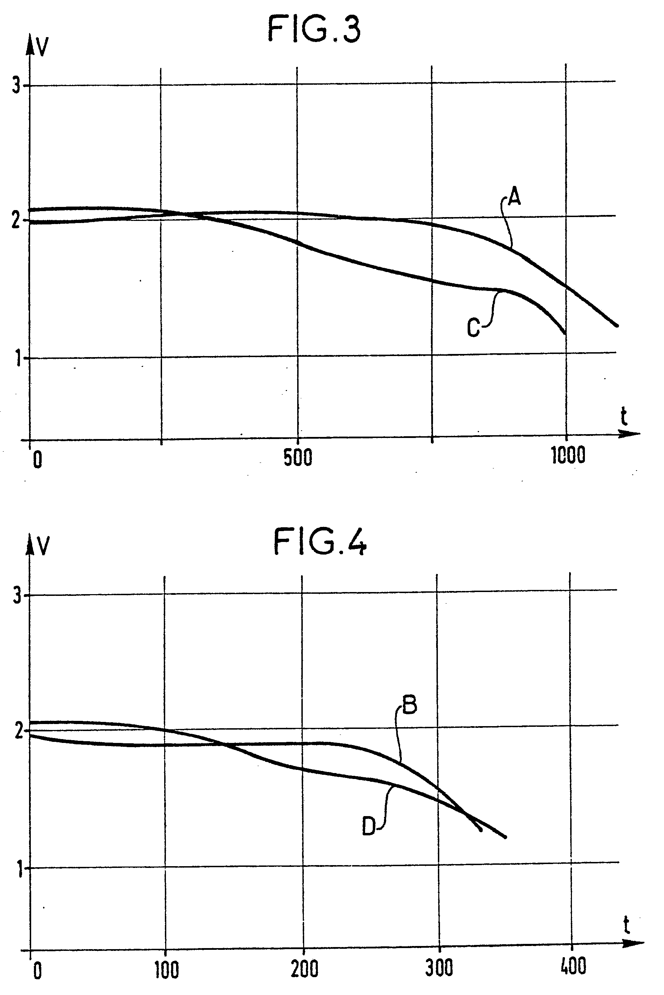

Les piles ont été déchargées sur une résistance de 15 k Ω. Leur courbe de décharge moyenne a été représentée en A sur la figure 3 analogue à la figure 2. La décharge a été arrêtée à 1,2 volt et a donné 138 mAh, c'est-à-dire un rendement de 100%. La tension se maintient vers 2 volts pendant la plus grande partie de la décharge.

3ème exemple: Des piles semblables à celles de l'exemple 2 ont été déchargées sur une résistance de 3 k Ω, c'est-à-dire à un régime assez rapid. La courbe de décharge moyenne a été représentée en B sur la figure 4, analogue à la figure 3.

La tension se maintient pendant la plus grande partie de la décharge vers 1, 9 volt. On a arrêté la décharge à 1,2 volt et la capacité obtenue a été 120 mAh, c'est-à-dire un rendement de 87%. La densité de courant moyenne est 0,59 mA/cm$^2$, et pendant la plus grande partie de la décharge 0,64 mA/cm$^2$.

4ème exemple: Des piles analogues à celles des exemples précédents, mais où l'électrolyte était une solution 2M de perchlorate de lithium dans le dioxolanne, ont été montées, puis déchargées sur une résistance de 15 k Ω.

La décharge moyenne est représentée par la courbe C de la figure 3.

La tension d'arrêt a été prise à 1,2 volt, et la capacité obtenue est 120 mAh, c'est-à-dire un rendement de 87%.

Bien que la tension initiale soit supérieure à 2 volts, elle passe au-dessous de cette tension plus rapidement que pour les piles du 2ème exemple. En fait la courbe de décharge semblerait se présenter avec deux paliers.

5ème exemple: Des piles semblables à celles du 4ème exemple ont été déchargées sur une résistance de 5 k Ω. Leur décharge est représentée par la courbe D de la figure 4. En arrêtant la décharge à 1,2 voit on obtient 124 mAh, c'est-à-dire un rendement de 90%.

La courbe de décharge a une forme analogue à celle de la courbe C.

La densité de courant moyenne est 0,59 mA/cm$^2$.

Bien entendu les piles des exemples qui précèdent sont ldes piles d'essai, et leur réalisation peut être améliorée, en particulier en diminuant la quantité de lithium très excédentaire, pour augmenter la quantité de masse positive. On a ainsi réussi à obtenir des piles de capacité 150 mAh pour le même format de piles, ce qui correspondrait, par exemple pour des piles selon le 2ème exemple, à une énergie de 300 mWh environ.

De telles piles peuvent trouver de nombreuses applications, par exemple dans les stimulateurs cardiaques. Bien entendu, la matière active positive peut également être mise en oeuvre dans des piles de géométrie différente, par exemple dans des piles cylindriques.

Comme on le voit pour les 3ème et 5ème exemples, la matière active est apte à se décharger à des régimes assez rapides et conviendrait donc bien pour cette forme de piles.

**Revendications**

1. Générateur électrochimique, dont l'électrode négative est du lithium et l'électrolyte est une solution liquide à la température ambiante dont le solvant est un composé aprotique, caractérisé par le fait que la matière active positive est constituée par un borate anhydre de formule $Cu_3B_2O_6$.

2. Générateur électrochimique selon la revendication 1, caractérisé par le fait que le solvant est choisi dans le groupe des esters et des éthers cycliques et à chaîne droite, et leurs mélanges.

3. Générateur électrochimique selon la revendication 2, caractérisé par le fait que les esters sont le carbonate de propylène et le carbonate d'éthylène, que les éthers cycliques sont le tétrahydrofurane et le dioxolane, et les éthers à chaîne droite le 1—2 diméthoxyéthane et autres glymes.

4. Générateur électrochimique selon l'une des revendications 1 à 3, caractérisé par le fait que le soluté de l'électrolyte est choisi dans un groupe comprenant le perchlorate de lithium, le tétrafluoborate de lithium, l'hexafluorarséniate de lithium.

**Patentansprüche**

1. Elektrochemischer Generator, dessen negative Elektrode Lithium ist und dessen Elektrolyt eine bei Umgebungstemperatur flüssige Lösung ist, deren Lösungsmittel eine aprotische Verbindung ist, dadurch gekennzeichnet, daß das positive aktive Material aus einem wasserfreien Borat der Formel $Cu_3B_2O_6$ besteht.

2. Elektrochemischer Generator nach Anspruch 1, dadurch gekennzeichnet, daß das Lösungsmittel aus der Gruppe der Ester, zyklischen Äther und Äther mit gerader Kette und ihren Mischungen ausgewählt wird.

3. Elektrochemischer Generator nach Anspruch 2, dadurch gekennzeichnet, daß die Ester Propylenkarbonat und Äthylenkarbonat sind, daß die zyklischen Äther Tetrahydrofuran und Dioxolan sind, und daß die Äther mit gerader Kette das 1—2 Dimethoxyäthan und andere Glyme sind.

4. Elektrochemischer Generator nach einem der Ansprüche 1 bis 3, dadurch gekennzeichnet, daß der gelöste Stoff des Elektrolyten aus der Gruppe gewählt wird, die Lithiumperchlorat, Lithiumtetrafluoborat und Lithiumhexafluorarseniat enthält.

**Claims**

1. An electrochemical generator, the negative electrode of which is lithium and the electrolyte a solution which is liquid at ambient temperature, its solvent being an aprotic compound, characterized in that the positive active material consists of an anhydrous borate whose formula is $Cu_3B_2O_6$.

2. An electrochemical generator according to claim 1, characterized in that the solvent is chosen from the group consisting of esters, cyclic ethers and ethers with straight chains and mixtures thereof.

3. An electrochemical generator according to claim 2, characterized in that the esters are propylene carbonate and ethylene carbonate, the cyclic ethers are tetrahydrofuran and dioxolane and the ethers with straight chains are 1-2-dimethoxyethane and other dimethyl ethers.

4. An electrochemical generator according to any one of claims 1 to 3, characterized in that the solute of the electrolyte is chosen from the group consisting of lithium perchlorate, lithium tetrafluoroborate and lithium hexafluorarsenate.

FIG.1

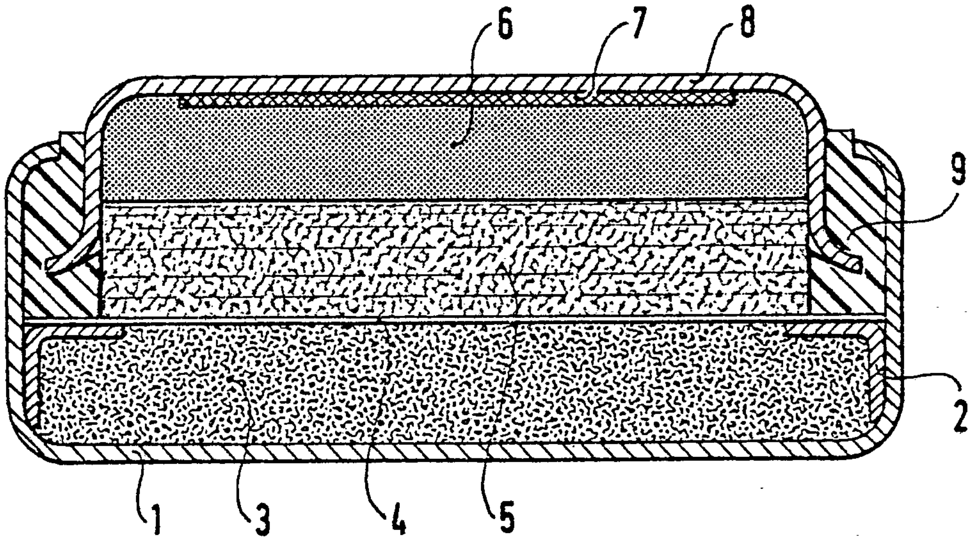


FIG.2

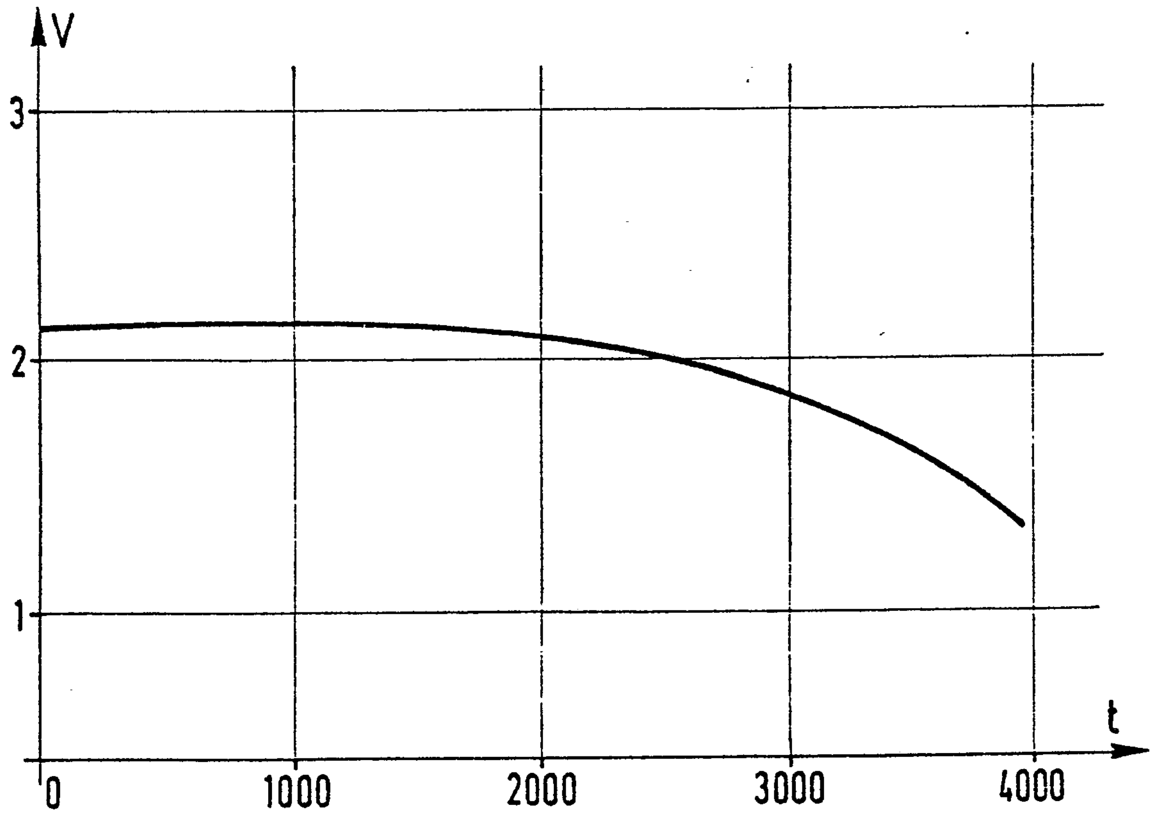

FIG.3

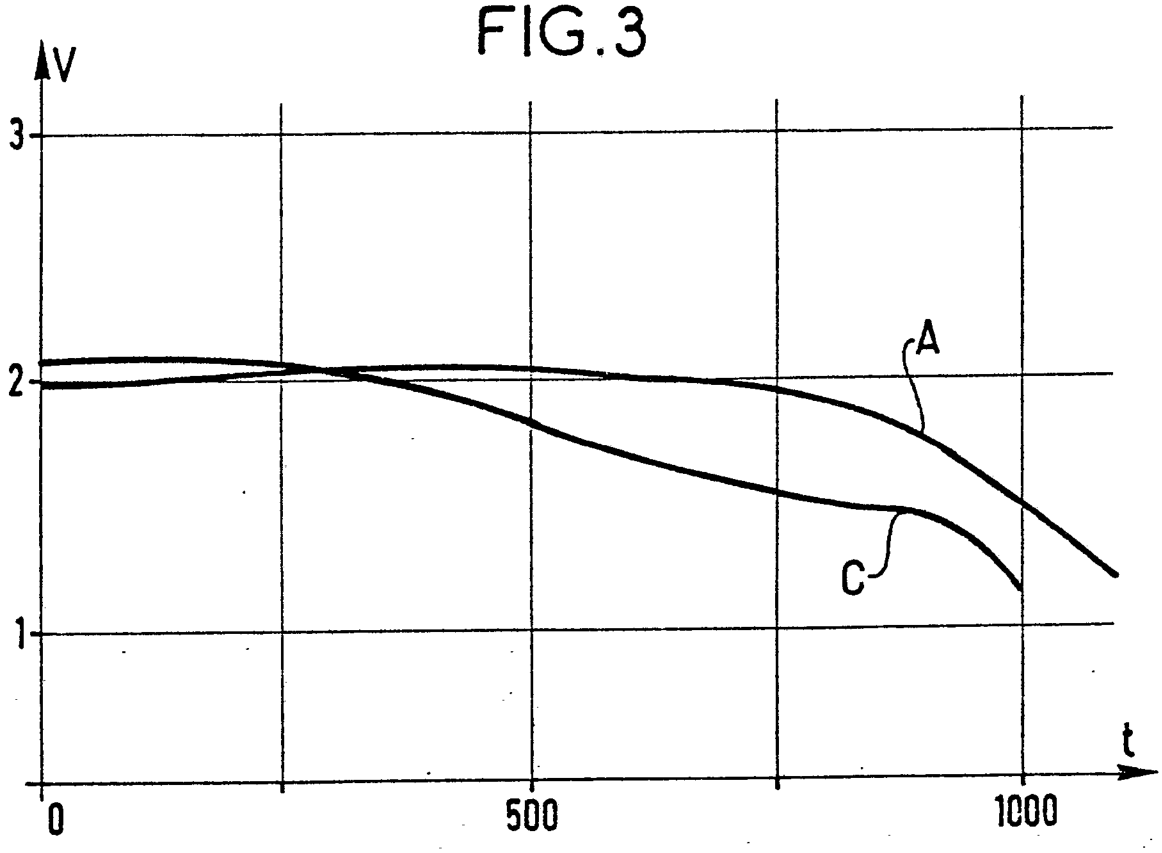


FIG.4